# EUROPEAN PATENT SPECIFICATION

(11) **EP 1 872 930 B1**
(45) Date of publication and mention of the grant of the patent: **28.10.2009**
(21) Application number: 07111339.3
(22) Date of filing: 28.06.2007
(51) Int. Cl.: B29D 30/00, B29D 30/26, B65G 47/90

(54) **Telescopic pickup device for transferring a product**
Ausfahrbare Aufnahmevorrichtung zum Versetzen eines Produkts
Dispositif de saisie télescopique pour transférer un produit

(30) Priority: 28.06.2006 IT TO20060476
(43) Date of publication of application: 02.01.2008
(73) Proprietor: Bridgestone Corporation, Tokyo 104-8340 (JP)
(72) Inventor: Barbati, Oreste, 00179 Roma (IT)
(74) Representative: Jorio, Paolo

(56) References cited:
- WO-A-00/35665
- GB-A- 2 232 655
- JP-A- 60 112 534
- SU-A1- 635 015

## Description

### TECHNICAL FIELD

The present invention relates to a pickup device for transferring a product, to a type assembling machine and to a method of transferring a product.

The pickup device according to the present invention may be used to advantage for handling tyres on a tyre assembling machine (TAM), to which the following description refers purely by way of example.

### BACKGROUND ART

Handling tyres on a tyre assembling machine comprises cyclically inserting a work tyre inside a work seat on the assembling machine, and extracting a worked tyre from the work seat on the assembling machine.

At present, tyres are handled on a tyre assembling machine using an X-Y gantry fixture connected to the assembling machine and supporting a pickup device to move the pickup device along a horizontal (X) axis and a vertical (Y) axis. The pickup device comprises a rigid L-shaped hook, which is inserted inside the central hole of the tyre to lift the tyre, and which normally has a horizontal arm longer than the transverse dimension of the tyre to engage the tyre stably.

Some examples of pickup devices of the above type are described in US4526267, SU635015, JP60112534, GB2232655 and WO0035665.

In some situations, the horizontal arm of the pickup device hook may be too long, so that it is impossible or at any rate difficult to manoeuvre the empty hook after inserting the work tyre inside, and before removing a worked tyre from the work seat of the assembling machine.

### DISCLOSURE OF THE INVENTION

It is an object of the present invention to provide a pickup device for transferring a product, designed to eliminate the aforementioned drawbacks, and which, in particular, is cheap and easy to produce.

According to the present invention, there is provided a pickup device for transferring a product, as claimed in claim 1.

According to the invention there is further provided a tire assembling machine as claimed in claim 16 and a method of transferring a product as claimed in claim 17. Particular embodiments of the invention are the subject of the respective dependent claims.

### BRIEF DESCRIPTION OF THE DRAWING

A non-limiting embodiment of the present invention will be described by way of example with reference to the accompanying drawings, in which:
Figures 1-5 show schematic, partly sectioned side views of a telescopic pickup device in accordance with the present invention and in different operating positions;
Figure 6 shows a lateral section of a supporting member of the Figure 1-5 pickup device.

### PREFERRED EMBODIMENTS OF THE INVENTION

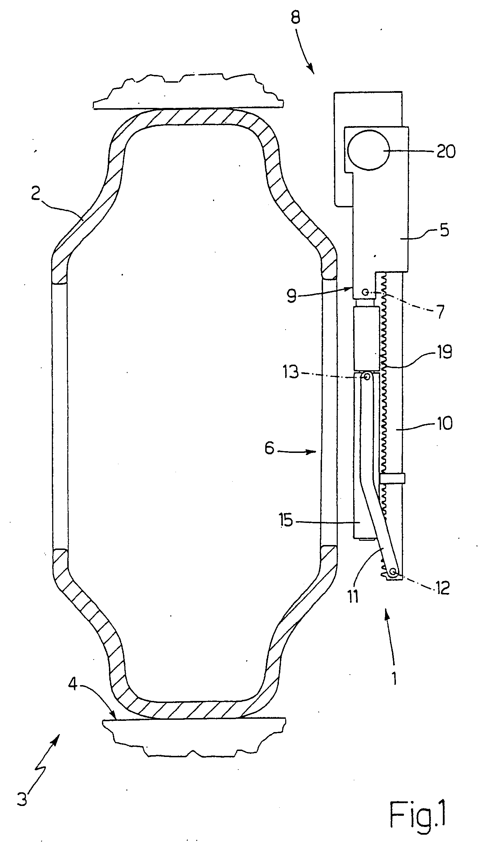

Number 1 in Figure 1 indicates as a whole a pickup device for transferring a product 2. Pickup device 1 is fitted to an X-Y gantry fixture (not shown), which moves pickup device 1 along a horizontal (X) axis and a vertical (Y) axis, and which is connected to a tyre assembling machine 3 (shown partly) to move tyres 2 to and from tyre assembling machine 3. More specifically, handling tyres 2 comprises cyclically inserting a work tyre 2 inside a work seat 4 on assembling machine 3, and extracting a worked tyre 2 from work seat 4 on assembling machine 3.

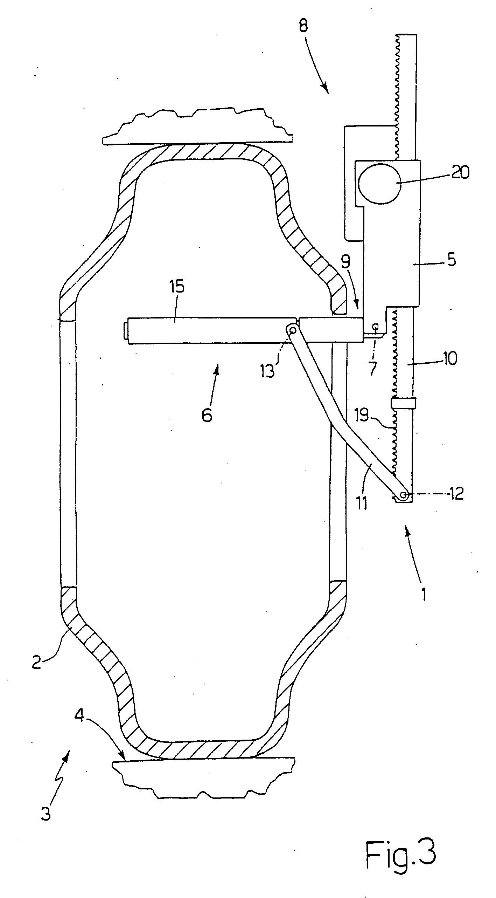

Pickup device 1 comprises a frame 5; and an elongated supporting member 6 fitted to frame 5 and hinged to frame 5 to rotate, about a horizontal axis of rotation 7, between a horizontal position (Figures 3-5), in which supporting member 6 is horizontal and perpendicular to frame 5, and a vertical position (Figure 1), in which supporting member 6 is vertical and parallel to frame 5.

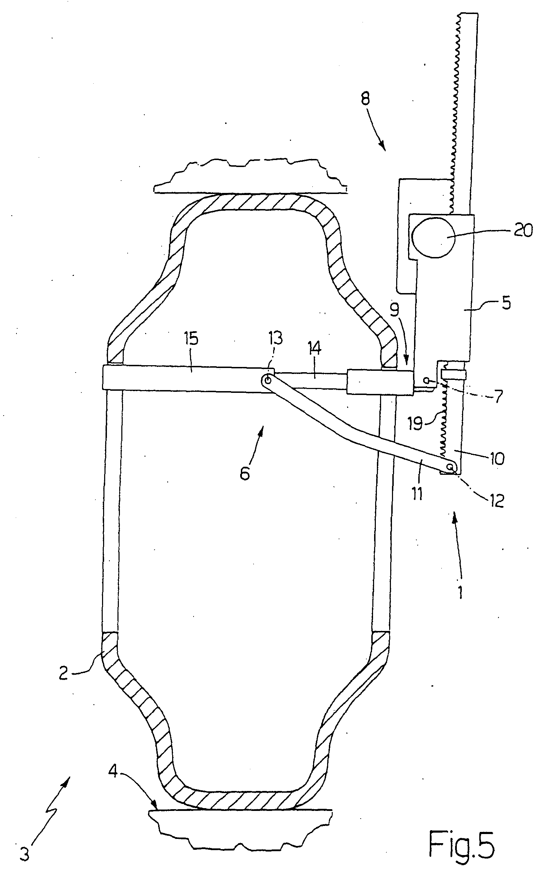

As shown in Figures 3-5, supporting member 6 is telescopic, so as to vary in length between a minimum value (shown in Figure 3) and a maximum value (shown in Figure 5).

Pickup device 1 comprises an actuator 8, which is fitted to frame 5 and acts on supporting member 6 to both adjust the length of supporting member 6 and rotate supporting member 6 about axis of rotation 7. In a preferred embodiment, actuator 8 only acts on supporting member 6 to adjust the length of supporting member 6 when supporting member 6 is in the horizontal position. In other words, extension of supporting member 6 is separate from rotation of supporting member 6, so that, when supporting member 6 rotates about axis of rotation 7, the length of supporting member 7 is constant, and vice versa.

A mechanical stop 9 is preferably provided at the hinge between supporting member 6 and frame 5 to arrest rotation of supporting member 6 about axis of rotation 7 once supporting member 6 is in the horizontal position.

Actuator 8 comprises a movable vertical rod 10, which is moved vertically and parallel to itself by actuator 8; and a connecting rod 11, which is hinged, at one end, to movable rod 10 about an axis of rotation 12 horizontally offset with respect to axis of rotation 7, and is hinged, at the opposite end, to supporting member 6 about an axis of rotation 13. More specifically, connecting rod 11 is hinged to an intermediate portion of supporting member 6. The movement of movable rod 10 may be guided by ball (recirculating-ball) bearings or bushings.

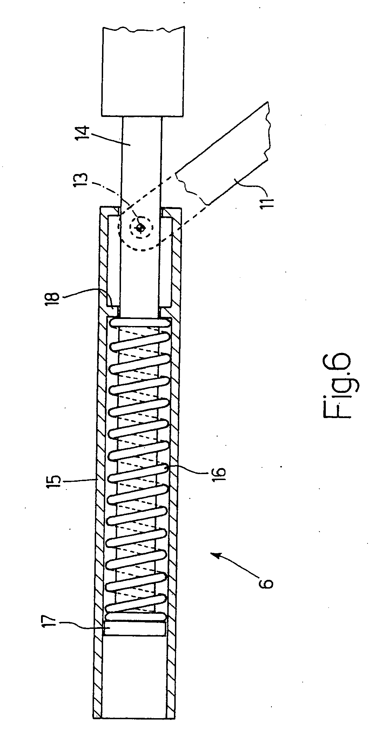

As shown in Figure 6, supporting member 6 comprises an inner body 14 hinged to frame 5 about axis of rotation 7; and a tubular outer body 15, which houses inner body 14 in sliding manner to slide axially with respect to inner body 14 between a withdrawn position (Figure 3) and an extracted position (Figure 5). Connecting rod 11 is hinged to one end of outer body 15 of supporting member 6.

A spring 16, inside tubular outer body 15 and about inner body 14, is compressed between a support 17 integral with inner body 14, and a support 18 integral with tubular outer body 15. Support 17 is located at the opposite end of inner body 14 to axis of rotation 7.

In a further embodiment not shown, a mechanical stop is provided to prevent rotation of supporting member 6 about axis of rotation 7 when tubular outer body 15 of supporting member 6 is in the extracted position (shown in Figure 5).

In the embodiment shown in the drawings, actuator 8 comprises a rack 19 integral with movable vertical rod 10; and an electric motor 20, which rotates a gear (not shown) meshing with rack 19. In a different embodiment not shown, actuator 8 comprises a fluid-powered (pneumatic or hydraulic) piston connected to movable vertical rod 10. In a further embodiment not shown, actuator 8 comprises a worm connected mechanically to movable vertical rod 10 with the interposition of a bearing; a threaded ring meshing with the worm; and an electric motor which rotates the threaded ring.

Operation of pickup device 1 will now be described with reference to Figures 1-5, which show the way in which pickup device 1 removes a worked tyre 2 from work seat 4 of assembling machine 3.

Pickup device 1 is first moved into position in front of tyre 2 (Figure 1), with supporting member 6 in the vertical position, in which supporting member 6 is vertical and parallel to frame 5. It is important to note that supporting member 6 is in the vertical position, to minimize the overall transverse size of the pickup device, when pickup device 1 is moved, without tyre 2, to and from assembling machine 3.

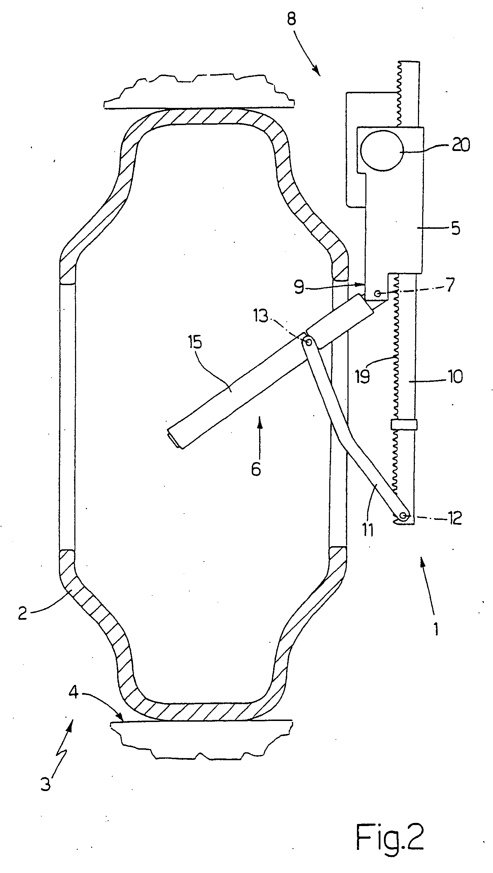

Once pickup device 1 is positioned in front of tyre 2, actuator 8 is operated to raise movable rod 10 and so rotate supporting member 6 with respect to frame 5 and about axis of rotation 7 (Figure 2). Rotation of supporting member 6 about axis of rotation 7 moves supporting member 6 from the vertical position (Figure 1) to the horizontal position (Figure 3), and is arrested by mechanical stop 9, which prevents any further rotation of supporting member 6 about axis of rotation 7 once supporting member 6 is in the horizontal position.

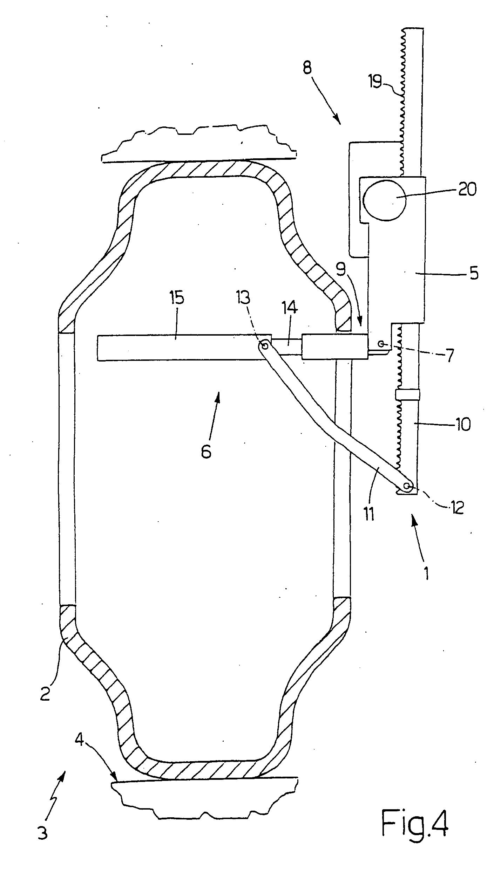

At this point, further upward travel of movable rod 10 slides tubular outer body 15 outwards with respect to inner body 14 (Figure 4); which relative movement of tubular outer body 15 with respect to inner body 14 is opposed by spring 16, which is gradually compressed. By the time movable rod 10 reaches the end of its upward travel, tubular outer body 15 is almost completely extracted with respect to inner body 14, and projects at least 10 mm from tyre 2 (Figure 5). At this point, supporting member 6 engages tyre 2 stably, actuator 8 is stopped to lock rod 10 (and so lock supporting member 6 with respect to tyre 2), and pickup device 1 can be moved to transfer tyre 2.

To release an engaged tyre 2, movable rod 10 is lowered gradually to perform the above steps in reverse.

Since, when actuator 8 is stopped, supporting member 6 could still rotate slightly about axis of rotation 7 as a result of further compression of spring 16, the force of spring 16 must be sufficiently greater than the force produced by the weight of tyre 2. Alternatively, said mechanical stop may be provided to prevent rotation of supporting member 6 about axis of rotation 7 when tubular outer body 15 of supporting member 6 is in the extracted position.

Pickup device 1 as described above is cheap and easy to produce, by only requiring one actuator 8. Moreover, when supporting member 6 is in the vertical position, pickup device 1 is extremely compact crosswise, thus enabling the unloaded pickup device 1 to be moved easily, even in highly confined spaces. Finally, pickup device 1 as described above can also be used for transferring tyres 2 with a central hole diameter smaller than the transverse width (e.g. a very wide 13-inch tyre).

## Claims

1. A pickup device (1) for transferring a product (2); the pickup device (1) comprises:
a frame (5);
an elongated supporting member (6), which is fitted to the frame (5), is, in a horizontal position, horizontal and perpendicular to the frame (5), and is telescopic to adjust its own longitudinal dimension between a minimum value and a maximum value; and
an actuator (8) which acts on the supporting member (6) to adjust the longitudinal dimension of the supporting member (6);
wherein the supporting member (6) is hinged to the frame (5) to rotate, about a horizontal first axis (7) of rotation, between the horizontal position, wherein the supporting member (6) is horizontal and perpendicular to the frame (5), and a vertical position, wherein the supporting member (6) is vertical and parallel to the frame (5).

2. A pickup device (1) as claimed in Claim 1, wherein the actuator (8) acts on the supporting member (6) both to adjust the longitudinal dimension of the supporting member (6), and to rotate the supporting member (6) about the first axis (7) of rotation.

3. A pickup device (1) as claimed in Claim 2, wherein the actuator (8) acts on the supporting member (6) to only adjust the longitudinal dimension of the supporting member (6) when the supporting member (6) is in the horizontal position.

4. A pickup device (1) as claimed in Claim 3, wherein a first mechanical stop (9) prevents further rotation of the supporting member (6) about the first axis (7) of rotation once the supporting member (6) is in the horizontal position.

5. A pickup device (1) as claimed in Claim 4, wherein the actuator (8) comprises a movable vertical rod (10) which is moved vertically and parallel to itself by the actuator (8); and a connecting rod (11) which is hinged, at one end, to the movable vertical rod (10) about a second axis (12) of rotation horizontally offset with respect to the first axis (7) of rotation, and is hinged, at the opposite end, to the supporting member (6) about a third axis (13) of rotation.

6. A pickup device (1) as claimed in Claim 5, wherein the connecting rod (11) is hinged to the supporting member (6) at an intermediate portion of the supporting member (6).

7. A pickup device (1) as claimed in Claim 6, wherein the supporting member (6) comprises an inner body (14) hinged to the frame (5) about the first axis (7) of rotation; and a tubular outer body (15) housing the inner body (14) in sliding manner, and which slides axially, with respect to the inner body (14), between a withdrawn position and an extracted position.

8. A pickup device (1) as claimed in Claim 7, wherein the connecting rod (11) is hinged to the tubular outer body (15) of the supporting member (6) at one end of the tubular outer body (15).

9. A pickup device (1) as claimed in Claim 7 or 8, wherein a spring (16) is housed inside the tubular outer body (15), surrounds the inner body (14), and is compressed between a first support (17) integral with the inner body (14), and a second support (18) integral with the tubular outer body (15).

10. A pickup device (1) as claimed in Claim 9, and comprising a second mechanical stop for preventing rotation of the supporting member (6) about the first axis (7) of rotation when the tubular outer body (15) of the supporting member (6) is in the extracted position.

11. A pickup device (1) as claimed in Claim 9 or 10, wherein the first support (17) is located at the opposite end of the inner body (14) to the first axis (7) of rotation.

12. A pickup device (1) as claimed in one of Claims 5 to 11, wherein the actuator (8) comprises a rack (19) integral with the movable vertical rod (10); and an electric motor (20) which rotates a gear meshing with the rack (19).

13. A pickup device (1) as claimed in one of Claims 5 to 11, wherein the actuator (8) comprises a fluid-powered piston connected to the movable vertical rod (10).

14. A pickup device (1) as claimed in one of Claims 5 to 11, wherein the actuator (8) comprises a worm connected mechanically to the movable vertical rod (10) with the interposition of a bearing; a threaded ring which meshes with the worm; and an electric motor which rotates the threaded ring.

15. A pickup device (1) as claimed in one of Claims 1 to 14, wherein the product (2) is a tyre.

16. A tyre assembling machine (3) comprising a work seat (4); and a pickup device (1) as claimed in one of Claims 1 to 15 for transferring tyres (2) to and from the work seat (4).

17. A method of transferring a product (2) by means of a pickup device (1) comprising a frame (5), and an elongated supporting member (6) fitted to the frame (5); the method comprising the steps of:
positioning the pickup device (1) in front of the product (2), with the supporting member (6) in a vertical position;
rotating the supporting member (6) with respect to the frame (5) and about an axis (7) of rotation to move the supporting member (6) from the vertical position to a horizontal position, in which the supporting member (6) is horizontal and perpendicular to the frame (5);
extending the supporting member (6) telescopically to engage the product (2) stably;
moving the pickup member (1) to transfer the product (2).

18. A method as claimed in Claim 17, and comprising the further step of preventing rotation of the supporting member (6) with respect to the frame (5) by means of a mechanical stop (9), once the supporting member (6) is in the horizontal position.

19. A method as claimed in Claim 17 or 18, wherein the supporting member (6) comprises an inner body (14) hinged to the frame (5) about the axis (7) of rotation; and a tubular outer body (15) housing the inner body (14) in sliding manner, and which slides axially, with respect to the inner body (14), between a withdrawn position and an extracted position; the supporting member (6) being extended telescopically by extracting the tubular outer body (15) with respect to the inner body (14).

20. A method as claimed in Claim 17, 18 or 19, wherein the product (2) is a tyre, and the supporting member (6) is inserted inside a central hole of the tyre.

## Patentansprüche

1. Aufnehmervorrichtung (1) zum Umsetzen eines Produktes (2); wobei die Aufnehmervorrichtung (1) aufweist:
einen Rahmen (5);
ein längliches Trägerelement (6), das am Rahmen (5) angebracht ist und das, in einer horizontalen Position, horizontal und senkrecht zum Rahmen (5) ist, und teleskopartig ist, um seine eigene Längsabmessung zwischen einem minimalen Wert und einem maximalen Wert zu verstellen; und
eine Betätigungseinrichtung (8), die auf das Trägerelement (6) wirkt, um die Längsabmessung des Trägerelementes (6) zu verstellen;
wobei das Trägerelement (6) mit dem Rahmen (5) gelenkig verbunden ist, um sich, und zwar um eine erste Rotationsachse (7), zwischen der horizontalen Position, bei der das Trägerelement (6) horizontal und senkrecht zum Rahmen (5) ist, und einer vertikalen Position zu drehen, bei der das Trägerelement (6) vertikal und parallel zum Rahmen (5) ist.

2. Aufnehmervorrichtung (1) nach Anspruch 1, bei der die Betätigungseinrichtung (8) auf das Trägerelement (6) einwirkt, sowohl um die Längsabmessung des Trägerelementes (6) einzustellen als auch um das Trägerelement (6) um die erste Rotationsachse (7) zu rotieren.

3. Aufnehmervorrichtung (1) nach Anspruch 2, bei der die Betätigungseinrichtung (8) auf das Trägerelement (6) einwirkt, um lediglich die Längsabmessung des Trägerelementes (6) einzustellen, wenn sich das Trägerelement (6) in der horizontalen Position befindet.

4. Aufnehmervorrichtung (1) nach Anspruch 3, bei der ein erster mechanischer Anschlag (9) eine weitere Rotation des Trägerelementes (6) um die erste Rotationsachse (7) verhindert, sobald sich das Trägerelement (6) in der horizontalen Position befindet.

5. Aufnehmervorrichtung (1) nach Anspruch 4, bei der die Betätigungseinrichtung (8) aufweist: eine bewegliche vertikale Stange (10), die durch die Betätigungseinrichtung (8) in vertikaler Richtung und parallel zu sich selbst bewegt wird; und eine Verbindungsstange (11), die an dem einen Ende mit der beweglichen vertikalen Stange (10) gelenkig verbunden ist, und zwar um eine zweite Rotationsachse (12), die bezüglich der ersten Rotationsachse (7) in horizontaler Richtung versetzt ist, und am entgegengesetzten Ende mit dem Trägerelement (6) gelenkig verbunden ist, und zwar um eine dritte Rotationsachse (13).

6. Aufnehmervorrichtung (1) nach Anspruch 5, bei der die Verbindungsstange (11) bei einem Zwischenabschnitt des Trägerelementes (6) mit dem Trägerelement gelenkig verbunden ist.

7. Aufnehmervorrichtung (1) nach Anspruch 6, bei der das Trägerelement (6) aufweist: einen inneren Körper (14), der mit dem Rahmen (5) um die erste Rotationsachse (7) gelenkig verbunden ist; und einem rohrförmigen äußeren Körper (15), der den inneren Körper (14) in gleitend verschieblicher Weise aufnimmt und der in axialer Richtung bezüglich des inneren Körpers (14) zwischen einer zurückgezogenen Position und einer ausgefahrenen Position gleitet.

8. Aufnehmervorrichtung (1) nach Anspruch 7, bei der die Verbindungsstange (11) an dem einen Ende des rohrförmigen äußeren Körpers (15) mit dem rohrförmigen äußeren Körper (15) des Trägerelementes (6) gelenkig verbunden ist.

9. Aufnehmervorrichtung (1) nach Anspruch 7 oder 8, bei der eine Feder (16) im Inneren des rohrförmigen äußeren Körpers (15) untergebracht ist, den inneren Körper (14) umgibt, und zwischen einer ersten Trageinrichtung (17), die mit dem inneren Körper (14) integral ist, und einer zweiten Trageinrichtung (18) zusammengedrückt wird, die mit dem rohrförmigen äußeren Körper (15) integral ist.

10. Aufnehmervorrichtung (1) nach Anspruch 9, die einen zweiten mechanischen Anschlag aufweist, der eine Rotation des Trägerelementes (6) um die erste Rotationsachse (7) verhindert, wenn sich der rohrförmige äußere Körper (15) des Trägerelementes (6) in der ausgefahrenen Position befindet.

11. Aufnehmervorrichtung (1) nach Anspruch 9 oder 10, bei der die erste Trageinrichtung (17) sich am zur ersten Rotationsachse (7) entgegengesetzten Ende des inneren Körpers (14) befindet.

12. Aufnehmervorrichfiung (1) nach einem der Ansprüche 5 bis 11, bei der die Betätigungseinrichtung (8) aufweist: eine Zahnstange (19), die mit der beweglichen vertikalen Stange (10) integral ist; und einen Elektromotor (20), der ein Zahnrad rotiert, das mit der Zahnstange (19) in Verzahnungseingriff ist.

13. Aufnehmervorrichtung (1) nach einem der Ansprüche 5 bis 11, bei der die Betätigungseinrichtung (18) einen fluidgetriebenen Kolben aufweist, der mit der beweglichen vertikalen Stange (10) verbunden ist.

14. Aufnehmervorrichtung (1) nach einem der Ansprüche 5 bis 11, bei der die Betätigungseinrichtung (8) eine Schnecke aufweist, die mit der beweglichen vertikalen Stange (10) mechanisch verbunden ist, und zwar mit dazwischen angeordnetem Lager; einen mit einem Gewinde versehenen Ring, der mit der Schnecke in Verzahnungseingriff ist, und einen Elektromotor, der den mit einem Gewinde versehenen Ring rotiert.

15. Aufnehmervorrichtung (1) nach einem der Ansprüche 1 bis 14, wobei das Produkt (2) ein Reifen ist.

16. Reifenmontagemaschine (3), aufweisend: einen Bearbeitungssitz (4); und eine Aufnehmervorrichtung (1) nach einem der Ansprüche 1 bis 15, um Reifen (2) zum Bearbeitungssitz (4) hin und von diesem weg umzusetzen.

17. Verfahren zum Umsetzen eines Produktes (2) mittels einer Aufnehmervorrichtung (1), die einen Rahmen (5) und ein am Rahmen (5) angebrachtes längliches Trägerelement (6) aufweist; wobei das Verfahren folgende Schritte umfasst:
Positionieren der Aufnehmervorrichtung (1) vor dem Produkt (2), wobei sich das Trägerelement (6) in einer vertikalen Position befindet;
Rotieren des Trägerelementes (6) bezüglich des Rahmens (5) und um eine Rotationsachse (7), um das Trägerelement (6) aus der vertikalen Position in eine horizontale Position zu bewegen, in welcher das Trägerelement (6) horizontal und senkrecht zum Rahmen (5) ist;
teleskopartiges Ausfahren des Trägerelementes (6), um mit dem Produkt (2) in stabiler Weise in Eingriff zu kommen;
Bewegen des Aufnehmerelementes (1), um das Produkt (2) umzusetzen.

18. Verfahren nach Anspruch 17, das den weiteren Schritt aufweist, dass eine Rotation des Trägerelementes (6) bezüglich des Rahmens (5) mittels eines mechanischen Anschlags (9) verhindert wird, sobald sich das Trägerelement (6) in der horizontalen Position befindet.

19. Verfahren nach Anspruch 17 oder 18, bei dem das Trägerelement (6) aufweist: einen inneren Körper (14), der am Rahmen (5) um die Rotationsachse (7) gelenkig angebracht ist; und einen rohrförmigen äußeren Körper (15), der den inneren Körper (14) in gleitend verschieblicher Weise aufnimmt, und der in axialer Richtung bezüglich des inneren Körpers (14) gleitend verschoben wird, und zwar zwischen einer zurückgezogenen Position und einer ausgefahrenen Position; wobei das Trägerelement (6) teleskopartig ausgefahren wird, und zwar durch Ausfahren des rohrförmigen äußeren Körpers (15) bezüglich des inneren Körpers (14).

20. Verfahren nach Anspruch 17, 18 oder 19, wobei das Produkt (2) ein Reifen ist, und das Trägerelement (6) innerhalb eines Mittellochs des Reifens eingeführt wird.

## Revendications

1. Dispositif de préhension (1) destiné à transférer un produit (2) ; le dispositif de préhension (1) comprend :
un châssis (5) ;
un élément de support allongé (6), qui est fixé au châssis (5), est, dans une position horizontale, horizontal et perpendiculaire au châssis (5), et est télescopique pour ajuster sa propre dimension longitudinale entre une valeur minimale et une valeur maximale ; et
un actionneur (8) qui agit sur l'élément de support (6) pour ajuster la dimension longitudinale de l'élément de support (6) ;
dans lequel l'élément de support (6) est articulé sur le châssis (5) pour tourner, autour d'un premier axe horizontal (7) de rotation, entre la position horizontale, dans laquelle l'élément de support (6) est horizontal et perpendiculaire au châssis (5), et une position verticale, dans laquelle l'élément de support (6) est vertical et parallèle au châssis (5).

2. Dispositif de préhension (1) selon la revendication 1, dans lequel l'actionneur (8) agit sur l'élément de support (6) à la fois pour ajuster la dimension longitudinale de l'élément de support (6), et faire tourner l'élément de support (6) autour du premier axe (7) de rotation.

3. Dispositif de préhension (1) selon la revendication 2, dans lequel l'actionneur (8) agit sur l'élément de support (6) uniquement pour ajuster la dimension longitudinale de l'élément de support (6) lorsque l'élément de support (6) est dans la position horizontale.

4. Dispositif de préhension (1) selon la revendication 3, dans lequel une première butée mécanique (9) empêche la poursuite de la rotation de l'élément de support (6) autour du premier axe (7) de rotation une fois que l'élément de support (6) est dans la position horizontale.

5. Dispositif de préhension (1) selon la revendication 4, dans lequel l'actionneur (8) comprend une tige verticale mobile (10) qui est déplacée verticalement et parallèlement à elle-même par l'actionneur (8) ; et une bielle (11) qui est articulée, au niveau d'une extrémité, sur la tige verticale mobile (10) autour d'un deuxième axe (12) de rotation, décalé horizontalement par rapport au premier axe (7) de rotation, et est articulé, au niveau de l'extrémité opposée, sur l'élément de support (6) autour d'un troisième axe (13) de rotation.

6. Dispositif de préhension (1) selon la revendication 5, dans lequel la bielle (11) est articulée sur l'élément de support (6) au niveau d'une partie intermédiaire de l'élément de support (6).

7. Dispositif de préhension (1) selon la revendication 6, dans lequel l'élément de support (6) comprend un corps interne (14) articulé sur le châssis (5) autour du premier axe (7) de rotation ; et un corps externe tubulaire (15) logeant le corps interne (14) de manière coulissante, et qui coulisse axialement, par rapport au corps interne (14), entre une position rétractée et une position déployée.

8. Dispositif de préhension (1) selon la revendication 7, dans lequel la bielle (11) est articulée sur le corps externe tubulaire (15) de l'élément de support (6) au niveau d'une extrémité du corps externe tubulaire (15).

9. Dispositif de préhension (1) selon la revendication 7 ou 8, dans lequel un ressort (16) est logé à l'intérieur du corps externe tubulaire (15), entoure le corps interne (14), et est comprimé entre un premier support (17) d'un seul tenant avec le corps interne (14), et un deuxième support (18) d'un seul tenant avec le corps externe tubulaire (15).

10. Dispositif de préhension (1) selon la revendication 9, et comprenant une deuxième butée mécanique destinée à empêcher une rotation de l'élément de support (6) autour du premier axe (7) de rotation lorsque le corps externe tubulaire (15) de l'élément de support (6) est dans la position déployée.

11. Dispositif de préhension (1) selon la revendication 9 ou 10, dans lequel le premier support (17) est situé au niveau de l'extrémité du corps interne (14) opposée au premier axe (7) de rotation.

12. Dispositif de préhension (1) selon l'une des revendications 5 à 11, dans lequel l'actionneur (8) comprend une crémaillère (19) d'un seul tenant avec la tige verticale mobile (10) ; et un moteur électrique (20) qui fait tourner un engrenage en prise avec la crémaillère (19).

13. Dispositif de préhension (1) selon l'une des revendications 5 à 11, dans lequel l'actionneur (8) comprend un piston hydraulique relié à la tige verticale mobile (10).

14. Dispositif de préhension (1) selon l'une des revendications 5 à 11, dans lequel l'actionneur (8) comprend une vis sans fin reliée mécaniquement à la tige verticale mobile (10) avec l'interposition d'un palier ; une bague filetée qui est en prise avec la vis sans fin ; et un moteur électrique qui fait tourner la bague filetée.

15. Dispositif de préhension (1) selon l'une des revendications 1 à 14, dans lequel le produit (2) est un pneumatique.

16. Machine d'assemblage (3) de pneumatiques comprenant un siège de travail (4) ; et un dispositif de préhension (1) selon l'une des revendications 1 à 15 destiné à transférer des pneumatiques (2) vers et depuis le siège de travail (4).

17. Procédé pour transférer un produit (2) au moyen d'un dispositif de préhension (1) comprenant un châssis (5), et un élément de support allongé (6) fixé au châssis (5) ; le procédé comprenant les étapes de :
positionnement du dispositif de préhension (1) devant le produit (2), l'élément de support (6) étant dans une position verticale ;
rotation de l'élément de support (6) par rapport au châssis (5) et autour d'un axe (7) de rotation pour déplacer l'élément de support (6) de la position verticale à une position horizontale, dans laquelle l'élément de support (6) est horizontal et perpendiculaire au châssis (5) ;
extension de l'élément de support (6) de façon télescopique pour engager le produit (2) de manière stable ;
déplacement de l'élément de support (6) pour transférer le produit (2).

18. Procédé selon la revendication 17, et comprenant l'étape supplémentaire consistant à empêcher une rotation de l'élément de support (6) par rapport au châssis (5) au moyen d'une butée mécanique (9), une fois que l'élément de support (6) est dans la position horizontale.

19. Procédé selon la revendication 17 ou 18, dans lequel l'élément de support (6) comprend un corps interne (14) articulé sur le châssis (5) autour de l'axe (7) de rotation ; et un corps externe tubulaire (15) logeant le corps interne (14) de manière coulissante, et qui coulisse axialement, par rapport au corps interne (14), entre une position rétractée et une position déployée ; l'élément de support (6) étant étendu de façon télescopique en déployant le corps externe tubulaire (15) par rapport au corps interne (14).

20. Procédé selon la revendication 17, 18 ou 19, dans lequel le produit (2) est un pneumatique, et l'élément de support (6) est inséré à l'intérieur d'un trou central du pneumatique.
